# FASCICULE DE BREVET EUROPEEN

(11) **EP 3 682 039 B1**
(45) Date de publication et mention de la délivrance du brevet: **01.11.2023**
(21) Numéro de dépôt: 18769361.9
(22) Date de dépôt: 13.09.2018
(51) Int. Cl.: C22B 1/00, C22B 3/16, C22B 59/00, C22B 60/00

(54) **PROCÉDÉ D'EXTRACTION SÉLECTIVE DE MÉTAUX PAR MÉCANOSYNTHÈSE ET LIXIVIATION**
VERFAHREN ZUR SELEKTIVEN EXTRAKTION VON METALLEN DURCH MECHANISCHE SYNTHESE UND LAUGUNG
METHOD FOR THE SELECTIVE EXTRACTION OF METALS BY MECHANOSYNTHESIS AND LEACHING

(30) Priorité: 14.09.2017 FR 1758538
(43) Date de publication de la demande: 22.07.2020
(73) Titulaire: Université Claude Bernard Lyon 1, 69100 Villeurbanne (FR); Centre National de la Recherche Scientifique, 75016 Paris (FR); Institut National des Sciences Appliquées de Lyon, 69621 Villeurbanne (FR); CPE Lyon Formation Continue et Recherche, 69100 Villeurbanne (FR); Ecole Nationale Supérieure de Chimie de Montpellier, 34090 Montpellier (FR); Université de Montpellier, 34090 Montpellier (FR)
(72) Inventeur: LECLAIRE, Julien, 69620 Le Bois d'Oingt (FR); SEPTAVAUX, Jean, 1348 Ottignies-Louvain-la-Neuve (BE); METRO, Thomas-Xavier, 34090 Montpellier (FR)
(74) Mandataire: Cabinet Becker et Associés
(86) Numéro de dépôt international: PCT/EP2018/074789
(87) Numéro de publication internationale: WO 2019/053148

(56) Documents cités:
- WO-A1-2014/188115
- CA-A1- 2 824 769
- DE-A1- 3 226 894
- US-A1- 2014 154 155
- WANG MENG-MENG ET AL: "An environmental benign process for cobalt and lithium recovery from spent lithium-ion batteries by mechanochemical approach", WASTE MANAGEMENT, ELSEVIER, NEW YORK, NY, US, vol. 51, 7 mars 2016 (2016-03-07), pages 239-244, XP029497055, ISSN: 0956-053X, DOI: 10.1016/J.WASMAN.2016.03.006

## Description

### DOMAINE DE L'INVENTION

La présente invention a trait au domaine des procédés d'extraction sélective de métaux à partir d'un échantillon donné.

Ce procédé trouve un intérêt particulier dans la pré-purification, le raffinage ou encore la séparation des métaux dits « stratégiques », tels que notamment les terres rares, les actinides et les métaux de transition, qui sont issus de minerais ou de déchets technologiques, ainsi que dans la décontamination d'échantillons solides.

### ETAT ANTERIEUR DE LA TECHNIQUE

Aujourd'hui, les métaux tels que les terres rares, les actinides ou certains métaux de transition font l'objet d'une demande croissante de la part des industriels. En effet, ils sont largement utilisés pour de nombreuses applications technologiques, notamment de pointe, telles que les batteries ou encore les aimants. Ainsi, le développement de procédés de capture sélective et de recyclage de ces métaux apparaît comme un enjeu important.

Dans ce contexte, il a été décrit un procédé d'extraction du cobalt et du lithium contenus dans un échantillon, par mise en contact de cet échantillon avec de l'EDTA et lixiviation réactive du solide formé de manière à récupérer ces éléments sous forme d'oxyde de cobalt et de carbonate de lithium (Wang Meng-Meng et al., Waste Management, Vol. 51 (2016) 239-244).

Les Demandeurs ont déjà proposé dans la demande WO 2014/188115 un procédé adapté pour la détection, la capture et/ou le relargage sélectif d'éléments chimiques choisis parmi les métaux pauvres, les alcalins, les alcalino-terreux, les actinides et les terres rares. Ce procédé consiste à faire précipiter sélectivement des métaux contenus dans un échantillon en un solide pouvant ensuite subir une lixiviation sélective en conditions douces. Il comprend la mise en contact du métal sous forme soluble (par exemple sous forme de nitrate, de chlorure, de trifluoracétate ou d'acétate) avec de préférence un adduit d'amine et de CO₂, dans un solvant tel que le méthanol, l'éthanol, l'eau ou leurs mélanges, pour former un complexe métallique de carbamate d'amine (ou "assemblage moléculaire"). La phase solide qui se forme par précipitation est ensuite récupérée par filtration ou centrifugation. Le solide peut comprendre un seul des métaux contenus dans l'échantillon, qui est ainsi sélectivement précipité. Le métal qui se trouve sous forme de complexe peut alors être relargué par chauffage et hydrolyse, résultant généralement en un sel de ce métal.

Bien que ce procédé présente des avantages indéniables du point de vue économique, il ne peut pas être mis en oeuvre sur des métaux présents dans l'échantillon sous forme de sels insolubles dans les milieux organiques, tels que des oxydes ou des carbonates métalliques. Ces composés doivent par conséquent être préalablement convertis en sels solubles, par exemple en chlorures, en nitrates ou en trifluoroacétates métalliques, généralement par dissolution à l'aide d'acide ou de base en fort excès. On comprend toutefois que ce pré-traitement non sélectif de l'échantillon affecte négativement l'impact économique et environnemental du procédé d'extraction.

Les Demandeurs ont par ailleurs mis au point une variante du procédé précité, dans laquelle les réactifs gazeux et liquides et les métaux en solution sont mis en contact dans des conditions particulières générant un écoulement segmenté qui permet une précipitation sélective en continu des métaux, et l'étape ultérieure éventuelle de relargage est également optimisée. Un tel procédé présente une productivité plus élevée (à degré de pureté égal) et éventuellement une meilleure sélectivité que le procédé discontinu précité, permettant ainsi son utilisation à l'échelle industrielle. Il présente toutefois également l'inconvénient de nécessiter l'utilisation d'acides et/ou de bases fortes, dont on cherche à limiter l'emploi.

Il subsiste donc le besoin de disposer d'un procédé d'extraction sélective de métaux qui soit plus respectueux de l'environnement et qui puisse être appliqué à un échantillon contenant ces métaux sous forme de sels inorganiques. En particulier, il serait souhaitable de disposer d'un procédé utilisant peu, voire pas, de solvant et d'acide ou base forte, qui ne génère pas de sous-produits et permette le recyclage ou la récupération de l'ensemble des réactifs et solvants mis en jeu.

### RESUME DE L'INVENTION

Il est apparu aux Demandeurs que le besoin précité pouvait être satisfait en formant par activation mécanique des assemblages moléculaires des métaux présents dans un échantillon inorganique et que ces assemblages pouvaient ensuite être lixiviés au moyen d'une ou plusieurs étapes de lavage réactif particulières.

L'invention concerne ainsi un procédé d'extraction d'au moins un métal contenu dans un échantillon renfermant un mélange de sels métalliques d'au moins deux métaux distincts, comprenant les étapes successives consistant à :
a) mettre en contact ledit échantillon, dans un dispositif de broyage, avec au moins une amine comprenant au moins une fonction amine primaire ou secondaire et au moins un gaz réactif, ou avec un adduit formé par réaction d'au moins une telle amine avec un gaz réactif,
b) récupérer le solide ainsi formé,
c) soumettre ledit solide à au moins une séquence de lixiviation à l'aide d'une solution de lavage formée d'au moins un solvant organique ou aqueux contenant éventuellement au moins une amine et/ou un gaz réactif, de manière à générer des eaux de lavage renfermant au moins l'un des métaux contenus dans l'échantillon et un résidu solide enrichi dans au moins un autre métal contenu dans l'échantillon, et
d) récupérer le métal contenu dans lesdites eaux de lavage et/ou dans ledit résidu solide.

L'invention a également pour objet l'utilisation du procédé précité pour séparer deux éléments chimiques contenus dans un échantillon renfermant un mélange de sels métalliques de ces éléments chimiques. Dans une première variante, l'un de ces éléments est une terre rare ou un actinide et l'autre est un métal de transition. Dans une seconde variante, l'un de ces éléments est un métal appartenant au groupe d ou f (métal de transition, terre rare ou actinide), de préférence un métal de transition, et l'autre est un métal appartenant au groupe s (métal alcalin ou alcalino-terreux).

### FIGURES

La Figure 1 illustre le pourcentage de métal extrait par lixiviation réactive, à l'aide de différentes solutions de lavage, de différents solides organométalliques obtenus par mécanosynthèse en l'absence de solvant.
La Figure 2 illustre le pourcentage de métaux extraits par lavage à l'eau d'un solide obtenu par mécanosynthèse en présence d'eau.

### DESCRIPTION DETAILLEE

Le procédé selon l'invention vise à extraire sélectivement au moins un métal dans un échantillon renfermant un mélange de sels inorganiques contenant ledit métal. Par l'expression "mélange de sels" on entend également désigner les sels polymétalliques, tels que les sulfures mixtes. Cet échantillon sera également désigné par la suite par "solide binaire", dans la mesure où il ne renferme que deux types de constituants : des cations métalliques et des anions inorganiques. Des exemples d'échantillons de ce type sont les scories de mines de nickel, les oxydes de sodium, fer et silicium (aegirine), et les sulfures mixtes de fer et de cuivre (chalcopyrite).

Il peut s'agir d'un échantillon de toute origine se présentant sous forme solide, notamment d'un échantillon issu de déchets technologiques (par exemple de tubes fluorescents, aimants ou électrodes de batterie) ou de gisements naturels (minerais). Cet échantillon comprend au moins deux métaux choisis dans le groupe comprenant les métaux pauvres, les alcalins, les alcalino-terreux, les actinides, les terres rares et les métaux de transition, parmi lesquels on cherche à extraire au moins un métal choisi parmi les métaux pauvres, les actinides, les terres rares et les métaux de transition.

Dans le cadre de la présente invention, les métaux pauvres désignent les éléments métalliques du bloc p du tableau périodique. Le groupe des métaux pauvres comprend l'Aluminium ₁₃Al, le Gallium ₃₁Ga, l'Indium ₄₉In, l'Étain ₅₀Sn, le Thallium ₈₁Tl, le Plomb ₈₂Pb, le Bismuth ₈₃Bi, le Polonium ₈₄Po et le Flérovium ₁₁₄Fl.

Dans le cadre de la présente invention, les alcalino-terreux désignent les éléments de la deuxième colonne du tableau périodique. Le groupe des alcalino-terreux comprend le béryllium ₄Be, le magnésium ₁₂Mg, le calcium ₂₀Ca, le strontium ₃₈Sr, le baryum ₅₆Ba et le radium ₈₈Ra.

Dans le cadre de la présente invention, les actinides désignent l'actinium ₈₉Ac, le thorium ₉₀Th, le protactinium ₉₁Pa, l'uranium ₉₂U, le neptunium ₉₃Np, le plutonium ₉₄Pu, l'américium ₉₅Am, le curium ₉₆Cm, le berkélium ₉₇Bk, le californium ₉₈Cf, l'einsteinium ₉₉Es, le fermium ₁₀₀Fm, le mendélévium ₁₀₁Md, le nobelium ₁₀₂No, et le lawrencium ₁₀₃Lr.

Dans le cadre de la présente invention, les terres rares désignent le scandium ₂₁Sc, l'yttrium ₃₉Y et les quinze lanthanides. Les lanthanides désignent le lanthane ₅₇La, le cérium ₅₈Ce, le praséodyme ₅₉Pr, le néodyme ₆₀Nd, le prométhium ₆₁Pm, le samarium ₆₂Sm, l'europium ₆₃Eu, le gadolinium ₆₄Gd, le terbium ₆₅Tb, le dysprosium ₆₆Dy, l'holmium ₆₇Ho, l'erbium ₆₈Er, le thulium ₆₉Tm, l'ytterbium ₇₀Yb et le lutétium ₇₁Lu.

Dans le cadre de la présente invention, les métaux de transition désignent les éléments du bloc d. Il s'agit des 38 éléments des périodes 4 à 7 et des groupes 3 à 12 hormis le lutécium ₇₁Lu et le lawrencium ₁₀₃Lr.

Les métaux précités se trouvent généralement sous forme d'oxyde, de carbonate, de phosphate, de sulfure, de vanadate, de silicate et/ou de sulfate, dans l'échantillon mis en oeuvre selon l'invention.

Dans la première étape du procédé selon l'invention, l'échantillon est mis contact, dans un dispositif de broyage, avec au moins une amine et au moins un gaz réactif, ou avec un adduit préalablement formé par réaction de l'amine avec le gaz réactif. Un tel adduit peut être facilement préparé par capture de CO₂ par l'amine dans un solvant tel que l'éthanol, récupération du précipité par filtration et lavage de ce dernier. Des exemples de gaz réactifs utilisables selon l'invention sont CO₂, COS, CS₂, H₂S, SO₂, NO₂ et CH₂O. On préfère selon l'invention utiliser le dioxyde de carbone (CO₂) comme gaz réactif. En pratique, on préfère que le métal à extraire se lie avec un ou des adduits obtenus *in situ* entre l'amine et le gaz réactif par coordination. Plus préférentiellement, lorsque le gaz réactif est CO₂, cet adduit est constitué d'une amine au moins partiellement carbamatée ou généralement d'un mélange d'amine libre et d'amines mono- et polycarbamatées.

La quantité d'amine mise en oeuvre est généralement comprise entre 1 et 400% en poids, et de préférence entre 10 et 200% en poids, par exemple entre 100 et 200% en poids, et de préférence de 10 à 60% en poids, par rapport au poids sec total de l'échantillon. On préfère par ailleurs que le ratio molaire du gaz réactif aux fonctions amines de l'amine soit compris entre 0 et 150%, par exemple entre 0 et 100%, et de préférence entre 0 et 100%, par exemple entre 0 et 20%.

Par "amine", on entend un composé comprenant au moins une, de préférence deux ou trois fonctions amine primaire ou secondaire, et éventuellement au moins une fonction amine tertiaire. L'amine selon l'invention peut être de formule générale R2-NH-R3, dans laquelle R2 est choisi parmi les groupes alkyles, alcényles, alcynyles, cycloalkyles, cycloalcényles, cycloalcynyles et les groupes aromatiques, dont la chaîne hydrocarbonée est éventuellement interrompue par au moins un hétéroatome choisi parmi N, O et S, et éventuellement substituée par au moins un substituant, tel qu'un groupe phosphonate, phosphate, oxime, amide, acide carboxylique et/ou thiol; R3 est choisi parmi un atome d'hydrogène, les groupes alkyles, alcényles, alcynyles, cycloalkyles, cycloalcényles, cycloalcynyles et les groupes aromatiques, dont la chaîne hydrocarbonée est éventuellement interrompue par au moins un hétéroatome choisi parmi N, O et S, et éventuellement substituée par au moins un substituant tel qu'un groupe phosphonate, phosphate, oxime, amide, acide carboxylique et/ou thiol. De préférence, les substituants ne comprennent indépendamment pas d'aldéhyde.

Avantageusement, l'amine comprend au moins deux fonctions amines, de préférence au moins trois, voire au moins quatre ou au moins cinq fonctions amines. En particulier, l'amine est telle que R3 est un atome d'hydrogène et R2 est un groupe alkyle dont la chaîne hydrocarbonée est interrompue par au moins un atome d'azote, notamment terminée par un groupe NH₂.

De préférence, l'amine selon l'invention est choisie parmi les composés suivants :

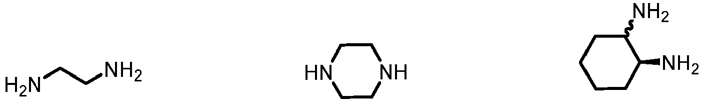

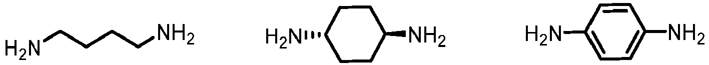

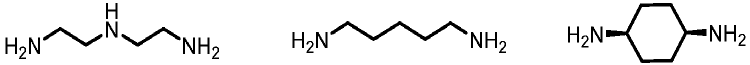

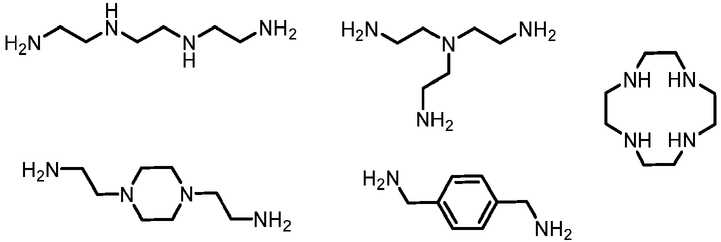

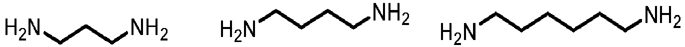

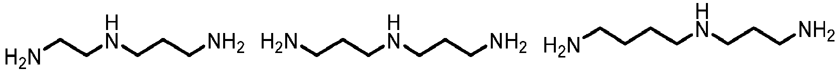

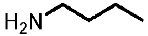

En variante, l'amine peut être un acide aminé.

Dans un mode de réalisation préféré, l'amine est choisie parmi l'éthylène diamine, la diéthylènetriamine, la triéthylènetétramine et la tris-(2-aminoéthyl)amine. La diéthylènetriamine (DETA) est particulièrement préférée pour une utilisation dans la présente invention.

Bien que plusieurs des amines décrites ci-dessus puissent être utilisées dans le procédé selon l'invention, on préfère qu'une seule amine soit mise en oeuvre. L'expression "une amine" ou "l'amine" employée dans cette description doit être comprise comme signifiant "une ou plusieurs amines".

En plus de l'amine et du gaz réactif, ou de l'adduit formé par ces deux composés, l'échantillon traité selon l'invention peut être également mis en contact avec au moins un acide, tel que l'acide trifluoroacétique, ou une base, afin de faciliter la réaction, en particulier lorsqu'il renferme au moins un oxyde métallique. En effet, dans le cas où le métal à capturer se trouve sous forme d'oxyde, l'utilisation d'un acide permet de modifier la surface de l'échantillon pour la rendre plus réactive. L'utilisation d'une base peut en revanche être préférable dans le cas où l'échantillon contient certains métaux tels que l'uranium. La quantité d'acide ou de base peut représenter de 0 à 10.000% en moles, et de préférence de 0 à 300% en moles, par rapport au nombre de moles de métal à extraire à partir de l'échantillon. On préfère toutefois que le procédé selon l'invention soit conduit en l'absence d'acide et de base autre que l'amine.

La mise en contact des réactifs précités est effectuée selon l'invention dans un dispositif de broyage, en présence ou en l'absence de solvants aqueux ou organiques tels que l'eau, le méthanol, l'éthanol, le bioéthanol, l'acétonitrile, le diméthylsulfoxide (DMSO), le diméthylformamide (DMF), le diméthylacétamide (DMA), le nitrométhane et leurs combinaisons.

Dans une première forme d'exécution de l'invention, les réactifs sont mis en contact en l'absence de solvant. Dans une seconde forme d'exécution, les réactifs sont mis en contact en présence d'eau. On utile avantageusement une quantité d'eau représentant de 0,1 à 10 équivalents massiques d'eau, de préférence de 0,5 à 1,5 équivalent massique d'eau, pour un équivalent massique d'échantillon sec.

Les réactifs peuvent être introduits dans le dispositif de broyage dans un ordre quelconque. On préfère toutefois y introduire d'abord l'échantillon métallique, puis l'amine. L'acide ou la base éventuellement utilisés peuvent être ajoutés au broyeur avant ou après l'amine.

Le dispositif de broyage convenant à une utilisation dans la présente invention peut être tout appareillage permettant d'appliquer des forces mécaniques élevées, classiquement utilisé dans les procédés de mécanosynthèse, choisi par exemple parmi les broyeurs à billes, à boulets, à marteau, à rotor, à impact, à meule, à jet d'air, à couteaux, à mortier, à disque ou à barres. On préfère selon l'invention utiliser un broyeur à billes et en particulier les broyeurs attriteurs, les broyeurs vibrants et les broyeurs planétaires.

L'homme du métier saura ajuster les paramètres de broyage en fonction de la nature et du volume de l'échantillon à traiter. Notamment, les bols et billes de broyage peuvent être constitués de tout matériau adapté, en particulier d'acier inoxydable, d'acier trempé, d'oxyde de zirconium, de carbure de tungstène, de nitrure de silicium, de corindon fritté, d'agate, de verre, de polypropylène, de polyamide, de polyuréthane, de polytétrafluoroéthylène, de polyméthacrylate d'alkyle et plus généralement de tout matériau ayant une densité et une dureté supérieures aux matériaux à broyer. Des billes en caoutchouc naturel ou synthétique peuvent également être utilisées. Un bol et des billes en acier inoxydable sont préférés pour une utilisation dans la présente invention. La taille du bol est adaptée à la quantité d'échantillon à broyer. Celui-ci peut varier de 1 mL à plusieurs centaines de m³. Le diamètre des billes est quant à lui adapté à la taille du bol de broyage et à la taille de particules de l'échantillon à broyer. Celui-ci peut varier de 0,5mm à 50 cm. Le taux de remplissage du bol de broyage par les billes et par l'échantillon à broyer, ainsi que la fréquence d'agitation, dépendent du type de broyeur et l'homme du métier saura les ajuster en conséquence. Dans le cas de l'utilisation d'un broyeur de type planétaire, le taux de remplissage du bol par les billes peut aller de 10 à 60% en volume. Préférentiellement, ce taux sera compris entre 20 et 40% en volume. Le taux de remplissage du bol de broyage par l'ensemble des matériaux à broyer (échantillon et réactifs solides et liquides) peut de son côté aller de 0,1 à 60% en volume. Préférentiellement, ce taux sera compris entre 0,5 et 10% en volume. En outre, la fréquence d'agitation des bols de broyage est généralement comprise entre 10 et 1.100 tours/min, préférentiellement entre 500 et 900 tours/min.

On préfère réaliser au moins deux, et de préférence de quatre à huit, séquences de broyage pendant 5 à 15 minutes séparées par un temps de repos de 10 à 20 minutes, par exemple, afin d'éviter un échauffement trop important du milieu réactionnel susceptible de conduire à une élimination du gaz réactif.

Dans la première forme d'exécution de cette invention, dans laquelle la réaction est conduite en l'absence de solvant et qui sera maintenant décrite en détail, on obtient àl'issue de cette première étape un solide qualifié dans la suite de cette description par "solide organométallique quaternaire", renfermant des domaines organométalliques constitués d'assemblages métal-(amine/gaz réactif) lixiviables.

Ce produit est soumis à au moins une séquence de lixiviation réactive particulière, permettant d'extraire sélectivement (et séquentiellement, dans le cas d'une pluralité d'étapes de lixiviation) les métaux ayant une affinité préférentielle avec la solution de lavage mise enjeu et ainsi d'extraire les métaux présents dans l'échantillon, par exemple de séparer les terres rares des métaux de transition.

Comme cela sera explicité plus loin, cette étape de lixiviation réactive permet également de récupérer ultérieurement certaines des espèces chimiques (amine et gaz réactif) qui ont originellement contribué à la formation du solide organométallique quaternaire et que l'on cherche éventuellement à recycler.

Pour mettre en oeuvre chacune des séquences de lixiviation réactive, le solide organométallique quaternaire est lavé à l'aide d'au moins un solvant organique et/ou aqueux, de préférence organique. Le solvant organique peut être choisi parmi ceux cités précédemment, préférentiellement le méthanol. Il peut contenir au moins une amine, choisie parmi celles citées précédemment, et éventuellement un gaz réactif tels que ceux cités précédemment, de préférence le CO₂. L'amine et/ou le gaz réactif peuvent être identiques à ceux utilisés en amont dans le procédé, ou différents de ceux-ci.

Dans le cas où la solution de lavage renferme les trois constituants précités (solvant, amine et gaz réactif), ceux-ci peuvent être présents dans un rapport molaire du gaz réactif aux fonctions amines de 1 à 100%, par exemple de 1 à 15% et préférentiellement de 3 à 5%. La concentration en amine dans le solvant peut être comprise entre 10⁻³ et 10 mol/L et de préférence entre 0,1 et 2 mol/L, par exemple 0,5 mol/L. Il est possible d'effectuer un ou plusieurs cycles de lavage du solide organométallique, le nombre de lavage pouvant varier entre 1 et 6, de préférence entre 2 et 3. Plus préférentiellement, le solide organométallique est lavé trois fois.

Cette étape de lixiviation réactive permet, en jouant sur le ratio des constantes de dissociation du complexe métallique présent dans le solide et sur la constante d'association des métaux avec l'adduit apporté par la solution de lavage, de séparer plus finement les métaux extraits pour obtenir, d'une part, des eaux de lavage renfermant au moins l'un des métaux contenus dans l'échantillon, sous forme non complexée, et, d'autre part, un résidu solide enrichi dans au moins un autre métal contenu dans l'échantillon, sous forme de complexe métallique. Par "enrichi", on entend que la proportion molaire de ce métal, par rapport à l'ensemble des métaux présents dans le résidu solide, est supérieure à la proportion molaire de ce métal par rapport à l'ensemble des métaux présents dans le solide organométallique. Il est ainsi possible de séparer les terres rares (qui resteront dans le solide) des métaux de transition (qui auront plus d'affinité pour la solution de lavage), par exemple.

Le résidu solide issu de l'étape de lavage réactif, désigné ici par "solide quaternaire pur", est généralement un complexe du métal à extraire. Il peut être séparé des eaux de lavage par toute technique connue de l'homme du métier, notamment par filtration ou centrifugation. L'homme du métier saura adapter les paramètres de l'étape de séparation de manière à obtenir une séparation optimale. Dans le cas par exemple d'une séparation par filtration, l'homme du métier sait déterminer la nature du filtre et/ou la taille des pores. De la même manière, dans le cas d'une séparation par centrifugation, l'homme du métier sera apte à déterminer les paramètres tels que la vitesse de centrifugation afin d'obtenir le résultat désiré.

Selon un mode de réalisation particulier, un gaz réactif tel que ceux précités, avantageusement du CO₂, peut être ajouté aux eaux de lavage afin de reformer un complexe, tel qu'un polycarbamate d'amine, du métal à extraire résiduel qu'elles contiennent. Celui-ci peut être récupéré par toute technique de séparation connue de l'homme du métier, notamment par filtration ou centrifugation, permettant de séparer le solide purifié des eaux-mères. Dans le cas où l'échantillon à traiter renferme des terres rares et des métaux de transition, ainsi qu'éventuellement d'autres métaux, le solide purifié est un complexe de terre rare, tandis que les eaux-mères renferment notamment une solution de sels de métaux de transition et de ces autres métaux éventuels. Le solide purifié peut être ajouté au résidu solide issu de l'étape de lavage réactif, tandis que les eaux-mères peuvent être traitées pour récupérer les métaux qu'elles renferment, notamment par évaporation du solvant (qui permet également le récupérer le gaz réactif, le cas échéant) puis calcination. Dans une variante préférée de l'invention, un co-solvant qui est miscible avec le solvant utilisé dans la solution de lavage réactif et peu polaire est ajouté aux eaux-mères, de façon à faire précipiter les sels métalliques et à les séparer ensuite, notamment par centrifugation, de l'amine en solution. L'amine peut ainsi être recyclée dans le procédé. Un exemple d'un tel co-solvant est le n-pentane.

Le solide quaternaire pur peut de son côté être mis en suspension dans une solution hydro-alcoolique contenant une quantité choisie d'acide qui est ensuite thermolysée (chauffage modéré). Le gaz réactif peut ainsi être récupéré sous forme pure, le cas échéant. Après refroidissement de la solution, un co-solvant tel que décrit ci-dessus peut être ajouté aux eaux-mères ainsi produites, afin de faire précipiter un sel métallique qui peut ensuite être séparé, notamment par centrifugation, de l'amine en solution. L'amine peut ainsi être recyclée dans le procédé.

Dans la seconde forme d'exécution de l'invention, où la mise en contact des réactifs est réalisée en présence d'eau, le solide obtenu à l'issue de l'étape de broyage renferme initialement, d'une part, des mono- et/ou polycarbamates de métaux oxophiles (tels que les terres rares et les métaux alcalino-terreux) qui, en présence d'eau dans le broyeur, forment des carbonates de ces métaux et, d'autre part, des assemblages moléculaires entre l'amine et les métaux aminophiles (tels que les métaux de transition).

Les carbonates métalliques ainsi obtenus sont insolubles dans l'eau, au contraire des complexes métalliques d'amine, de sorte que ces deux types de produits peuvent facilement être séparés par lavage à l'eau, dans l'étape de lixiviation selon l'invention. Dans cette forme d'exécution de l'invention, l'étape de lixiviation réactive utilise ainsi une solution de lavage constituée d'eau et éventuellement aussi d'au moins une amine, choisie parmi celles citées précédemment, et/ou d'au moins un gaz réactif tels que ceux cités précédemment, de préférence le CO₂. L'amine et/ou le gaz réactif peuvent être identiques à ceux utilisés en amont dans le procédé, ou différents de ceux-ci. Il est possible d'effectuer un ou plusieurs cycles de lavage du solide, le nombre de lavage pouvant varier entre 1 et 10, de préférence entre 2 et 3.

De la silice peut éventuellement être également présente sous forme solide à l'issue de la réaction, dans le cas où l'échantillon mis en oeuvre renferme des silicates métalliques. Elle peut alors être facilement séparée des carbonates métalliques par séparation granulométrique.

L'invention sera mieux comprise à la lumière des exemples suivants qui sont fournis à titre purement illustratif.

### EXEMPLES DE REALISATION DE L'INVENTION

### Exemple 1 : Essais de broyage réactif en l'absence de solvant

### 1A- Formation du solide quaternaire à partir d'amine et de CO₂

On a introduit dans le réacteur d'un broyeur planétaire de 20 mL en acide inoxydable une masse totale d'environ 200 mg d'un mélange de diéthylènetriamine (DETA), éventuellement d'acide trifluoroacétique (TFA) et d'un solide binaire (M) constitué d'un sel de praséodyme ou de néodyme, dans des proportions variables. 80 billes en acier inoxydable de 5 mm de diamètre ont été introduites dans le réacteur qui a ensuite été fermé hermétiquement. Le réacteur a alors été placé sous 3 bars de dioxyde de carbone puis purgé. Les cycles ajout de CO₂ / purge ont été répétés deux fois, puis le réacteur a été placé sous 3 bars de CO₂. Le mélange réactionnel a été agité à 800 tours/min pendant une heure. Le contenu du réacteur a alors été récupéré dans 3 mL de méthanol. Après centrifugation et collecte du surnageant, le solide a été séché sous vide. Les fractions massiques de DETA dans le solide obtenu ont été quantifiées par RMN ¹H et ¹⁹F, en utilisant le 4-p-fluorophénol comme référence interne. La fraction massique de métal a été quantifiée par spectrométrie de masse à plasma d'argon induit par haute fréquence (ICP OES). La fraction massique de CO₂ a été quantifiée par gazimétrie lors d'une digestion acide.

Les résultats obtenus sont rassemblés dans le tableau ci-dessous.

| Essai | Réactifs | | | | Produit | |
|---|---|---|---|---|---|---|
| | DETA (µL / éq.) | M | Masse M (mg) | TFA (µL / éq.) | % M | % DETA/CO₂ |
| 1 | 140 / 12 | Pr₂(CO₃)₃.(H₂O)₈ | 65,6 | 0 | 55 | 7/27 |
| 2 | 133 / 12 | Pr₂(CO₃)₃.(H₂O)₈ | 61,8 | 7,8 / 1 | 55 | 10/27 |
| 3 | 154 / 12 | Nd₂O₃ | 39,8 | 9 / 1 | 71 | 3/6 |
| 4 | 170 / 24 | Pr₂(CO₃)₃.(H₂O)₈ | 40 | 0 | 43 | 13/25 |
| 5 | 130 / 12 | Pr₂(CO₃)₃.(H₂O)₈ | 61,8 | 8 / 1 | 34 | 20/30 |

Dans les Essais 2 et 5, les réactifs ont été introduits dans le broyeur dans un ordre différent.

Ces essais démontrent que le solide formé renferme bien de la DETA et du CO₂. La conversion partielle du carbonate de praséodyme utilisé dans l'essai 5 en solide quaternaire a été confirmée par analyse thermogravimétrique.

### 1B- Formation du solide quaternaire à partir d'un carbamate d'amine

On a introduit dans un tube 1,502 g de DETA dans laquelle on a fait buller du CO₂ jusqu'à en ajouter 426,6 mg (environ 0,66 équivalent). On a obtenu un carbamate de DETA sous la forme d'un gel très visqueux. On a introduit dans le réacteur d'un broyeur planétaire de 20 mL en acier inoxydable une masse totale d'environ 200 mg d'un mélange de carbamate de DETA, d'un solide binaire (M) constitué d'un sel de praséodyme, et éventuellement d'acide trifluoroacétique (TFA), les réactifs étant introduits dans cet ordre, dans des proportions variables. 77 billes en acier inoxydable de 5 mm de diamètre ont été introduites dans le réacteur qui a ensuite été fermé hermétiquement. Le mélange réactionnel a été agité à 800 tours/min pendant 1 h ou 10 min. Le contenu du réacteur a alors été récupéré dans 3 mL de méthanol. Après centrifugation et collecte du surnageant, le solide a été lavé par 3 mL de méthanol, centrifugé à nouveau, et le solide a été séché sous vide. Les fractions massiques de DETA dans le solide obtenu ont été quantifiées par RMN ¹H et ¹⁹F, en utilisant le 4-p-fluorophénol comme référence interne. La fraction massique de métal a été quantifiée par spectrométrie de masse à plasma d'argon induit par haute fréquence (ICP OES).

Les résultats obtenus sont rassemblés dans le tableau ci-dessous.

| Essai | Réactifs | | | | Temps broyage | Produit | |
|---|---|---|---|---|---|---|---|
| | Masse carbamate (mg / eq.) | M | Masse M (mg) | TFA (µL / éq.) | | % M | % DETA |
| 6 | 100 / 4,5 | Pr₂(CO₃)₃.(H₂O)₈ | 98,8 | 0 | 1h | 37 | 13 |
| 7 | 100 / 7,8 | Pr₂(CO₃)₃.(H₂O)₈ | 56,7 | 29 / 2,25 | 1h | 33 | 16 |
| 8 | 99 / 4,5 | Pr₂(CO₃)₃.(H₂O)₈ | 101 | 0 | 10min | 49 | 9 |

Ces essais démontrent que le solide formé renferme bien de la DETA. La conversion partielle du carbonate de praséodyme utilisé dans l'essai 7 en solide quaternaire a été confirmée par analyse thermogravimétrique.

### Exemple 2 : Essais de lixiviation du solide organométallique

Afin d'évaluer l'influence d'une étape de broyage en présence de diéthylènetriamine et de CO₂ sur l'efficacité de la lixiviation, des tests de lixiviation avec différentes solutions de lavage ont été réalisés sur plusieurs sels métalliques ayant subi ou non une étape de broyage réactif.

Les sels métalliques sélectionnés sont :
- Le carbonate de Terbium Tb₂(CO₃)₃
- Le carbonate de Néodyme Nd₂(CO₃)₃
- L'oxyde de Néodyme Nd₂O₃

Les solutions de lavage sont :
- Méthanol
- Diéthylènetriamine à 0,5 M dans le méthanol
- Diéthylènetriamine à 0,5 M avec 0,1 équivalent de CO₂ dans le méthanol
- Diéthylènetriamine à 0,5 M avec 0,5 équivalent de CO₂ dans le méthanol

### Procédure de broyage :

Pour chaque échantillon, une quantité connue du sel métallique choisi (environ 250 mg) est ajoutée à un réacteur de broyage de 125 mL en agate. 12 équivalents molaires de diéthylènetriamine préalablement chargée à 0,35 équivalent de CO₂ sont ajoutés. 42 billes en agate de 10 mm de diamètre sont ajoutées. Le réacteur est agité 1h à 500 tours par minutes. Le réacteur est rincé par 10 mL de méthanol. Le solide est récupéré par centrifugation puis séché.

### Procédure de lixiviation :

Pour chaque échantillon, une quantité connue du sel métallique choisi (environ 25 mg) est ajoutée à un tube de 10 mL et lavée trois fois consécutives par 3 mL de la solution adéquate. La séparation est réalisée par centrifugation et prélèvement du surnageant. Les phases liquides sont collectées et rassemblées puis évaluées par spectrométrie à plasma à couplage inductif, couplée à un spectromètre à émission optique (ICP OES) pour quantifier les métaux correspondants. On obtient selon cette méthode le rapport molaire entre la quantité de métal extraite dans la phase liquide et la quantité initiale de l'élément métallique dans le solide.

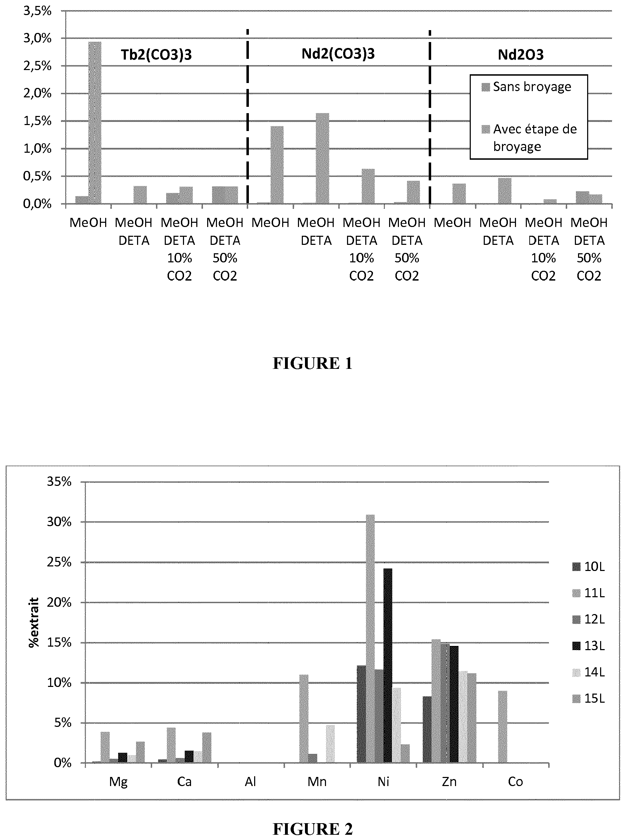

Les résultats de cet essai sont illustrés à la Figure 1. Comme il ressort de cette Figure, l'oxyde et le carbonate de néodyme ne sont pas sensibles à la lixiviation ; il n'est donc pas possible de récupérer directement le néodyme à partir d'un échantillon contenant ces sels. En revanche, le solide obtenu par broyage réactif de l'oxyde et du carbonate de néodyme est bien sensible à la lixiviation. De même, le carbonate de terbium est bien plus sensible à la lixiviation après broyage réactif. On notera que le taux de lixiviation dépend de la composition de la solution de lavage, qui peut être facilement déterminée par l'homme du métier.

### Exemple 3 : Essais de broyage réactif en présence d'eau

On a pré-broyé des scories de mines de nickel obtenues auprès de Koniambo Nickel SAS à l'aide d'un mortier en agate et d'un pilon. Pour chacun des essais, 1g de ces scories pré-broyées a été ajouté à un réacteur de 20 mL en acide inoxydable équipé de 80 billes d'acier inoxydable ayant un diamètre de 5 mm. On a introduit dans le réacteur soit un adduit de DETA et de CO₂, dans un rapport molaire de 1:1, soit de la DETA seule, ainsi que de l'eau, dans les quantités indiquées dans le tableau ci-dessous. On a fait fonctionner le broyeur pendant plusieurs cycles de 10 min, suivis chacun d'un temps de repos de 15 min pour éviter l'accumulation de chaleur potentiellement préjudiciable au procédé de lixiviation sélectif. La température de l'échantillon restait ainsi proche de la température ambiante. La vitesse d'oscillation du réacteur était fixée à 500 tours/min. Les échantillons ont été collectés avec 10 mL d'eau et centrifugés. Le solide obtenu a ensuite été lavé deux fois avec 10 mL d'eau.

| Essai | Masse échantillon (g) | Additif | Quantité d'additif (mg) | H₂O (mL) | Temps (min) |
|---|---|---|---|---|---|
| 10L | 1,0104 | DETA-CO2 | 969 | 1 | 2 x 10 |
| 11L | 1,0035 | DETA-CO2 | 1036 | 1 | 6 x 10 |
| 12L | 1,0042 | DETA | 668 | 1 | 2 x 10 |
| 13L | 0,9989 | DETA-CO2 | 231 | 1 | 2 x 10 |
| 14L | 0,9959 | DETA-CO2 | 2051 | 1 | 2 x 10 |
| 15L | 1,0069 | DETA-CO2* | 251 | 0 | 2 x 10 |

| | | | | | |
|---|---|---|---|---|---|
| * Le réacteur a en outre été purgé avec du CO₂ et mis sous pression de 7 bar de CO₂. | | | | | |

Le surnageant a été récupéré et analysé par ICP-OES (spectrométrie à plasma à couplage inductif, couplée à un spectromètre à émission optique) pour déterminer sa teneur en métal. Les résultats de cette analyse sont présentés à la Figure 2. Comme le montre cette Figure, le procédé selon l'invention a permis d'extraire sélectivement les métaux de transition présents dans l'échantillon (manganèse, nickel, zinc, cobalt). Cette extraction est d'autant plus efficace que le nombre de cycles de broyage est plus élevé, comme le montre la comparaison des essais 10L et 11L, et que la ratio de la quantité pondérale d'amine au poids sec total de l'échantillon est plus faible, comme le montre la comparaison de l'essai 13L avec les essais 10L et 14L.

En parallèle, on a mesuré la granulométrie des solides obtenus dans les essais 10L à 15L ci-dessus par diffraction laser, à l'aide d'un analyseur Horiba. Il a été observé que les meilleurs résultats obtenus dans l'essai 11L par rapport à l'essai 10L ne sont pas attribuables à une taille de particules plus faible, puisqu'un temps total de broyage plus long ne permet pas une réduction supplémentaire de la taille des particules. Cette analyse a également démontré que l'ajout de CO₂ au mélange réactionnel conduisait à une granulométrie plus faible, caractéristique d'un effet de minéralyse amélioré.

## Revendications

1. Procédé d'extraction d'au moins un métal contenu dans un échantillon renfermant un mélange de sels métalliques d'au moins deux métaux distincts, comprenant les étapes successives consistant à :
a) mettre en contact ledit échantillon, dans un dispositif de broyage, avec au moins une amine comprenant au moins une fonction amine primaire ou secondaire et au moins un gaz réactif, ou avec un adduit formé par réaction d'au moins une telle amine avec un gaz réactif,
b) récupérer le solide ainsi formé,
c) soumettre ledit solide à au moins une séquence de lixiviation à l'aide d'une solution de lavage formée d'au moins un solvant organique ou aqueux contenant éventuellement au moins une amine et/ou un gaz réactif, de manière à générer des eaux de lavage renfermant au moins l'un des métaux contenus dans l'échantillon et un résidu solide enrichi dans au moins un autre métal contenu dans l'échantillon, et
d) récupérer le métal contenu dans lesdites eaux de lavage et/ou dans ledit résidu solide.

2. Procédé selon la revendication 1, **caractérisé en ce que** ledit échantillon est un solide issu de déchets technologiques ou de gisements naturels.

3. Procédé selon la revendication 1 ou 2, **caractérisé en ce que** l'échantillon comprend au moins deux métaux choisis dans le groupe des métaux pauvres, des métaux alcalins, des métaux alcalino-terreux, des actinides, des terres rares et des métaux de transition.

4. Procédé selon l'une quelconque des revendications 1 à 3, **caractérisé en ce que** lesdits métaux se présentent sous forme d'oxyde, de carbonate, de phosphate, de sulfure, de vanadate, de silicate et/ou de sulfate, dans l'échantillon.

5. Procédé selon l'une quelconque des revendications 1 à 4, **caractérisé en ce que** l'un des métaux est une terre rare ou un actinide et l'autre est un métal de transition.

6. Procédé selon l'une quelconque des revendications 1 à 4, **caractérisé en ce que** l'un des métaux est un métal de transition, une terre rare ou un actinide, de préférence un métal de transition, et l'autre est un métal alcalin ou alcalino-terreux.

7. Procédé selon l'une quelconque des revendications 1 à 6, **caractérisé en ce que** le dispositif de broyage est choisi parmi les broyeurs à billes, à boulets, à marteau, à rotor, à impact, à meule, à jet d'air, à couteaux, à mortier, à disque ou à barres, de préférence les broyeurs à billes.

8. Procédé selon l'une quelconque des revendications 1 à 7, **caractérisé en ce que** les gaz réactifs mis en oeuvre dans l'étape a) et/ou c) sont indépendamment choisis parmi CO₂, COS, CS₂, H₂S, SO₂, NO₂ et CH₂O, de préférence le gaz réactif est CO₂.

9. Procédé selon l'une quelconque des revendications 1 à 8, **caractérisé en ce que** les amines mises en oeuvre dans l'étape a) et éventuellement c) sont indépendamment choisies parmi l'éthylène diamine, la diéthylènetriamine, la triéthylènetétramine et la tris-(2-aminoéthyl)amine, de préférence l'amine est la diéthylènetriamine (DETA).

10. Procédé selon l'une quelconque des revendications 1 à 9, **caractérisé en ce que** l'étape a) est réalisée en l'absence de solvant.

11. Procédé selon l'une quelconque des revendications 1 à 9, **caractérisé en ce que** l'étape a) est réalisée en présence d'eau.

12. Utilisation du procédé selon l'une quelconque des revendications 1 à 11 pour séparer deux éléments chimiques contenus dans un échantillon renfermant un mélange de sels métalliques de ces éléments chimiques.

## Patentansprüche

1. Verfahren zur Extraktion mindestens eines Metalls, das in einer Probe enthalten ist, die eine Mischung aus Metallsalzen von mindestens zwei unterschiedlichen Metallen enthält, umfassend die aufeinanderfolgenden Schritte, bestehend aus:
a) Inkontaktbringen dieser Probe in einer Mahlvorrichtung mit mindestens einem Amin, das mindestens eine primäre oder sekundäre Aminfunktion umfasst und mindestens einem reaktiven Gas, oder mit einem Addukt, das durch Reaktion diese mindestens einen solchen Amins mit einem reaktiven Gas gebildet wird,
b) Zurückgewinnen des so gebildeten Feststoffs,
c) Unterwerfen dieses Feststoffs unter mindestens eine Auslaugungssequenz unter Verwendung einer Waschlösung, die aus mindestens einem organischen oder wässrigen Lösungsmittel gebildet ist, das optional mindestens ein Amin und/oder ein reaktives Gas enthält, um so Waschwasser zu erzeugen, das mindestens eines der Metalle in der Probe enthält und einen festen Rückstand, der mit mindestens einem anderen in der Probe enthaltenen Metall angereichert ist, und
d) Zurückgewinnen des in diesem Waschwasser und/oder in diesem festen Rückstand enthaltenen Metalls.

2. Verfahren nach Anspruch 1, **dadurch gekennzeichnet, dass** es sich bei dieser Probe um einen Feststoff aus technologischen Abfällen oder natürlichen Ablagerungen handelt.

3. Verfahren nach Anspruch 1 oder 2, **dadurch gekennzeichnet, dass** die Probe mindestens zwei Metalle ausgewählt aus der Gruppe der Post-Übergangsmetalle, Alkalimetalle, Erdalkalimetalle, Aktiniden, seltenen Erden und Übergangsmetalle enthält.

4. Verfahren nach einem der Ansprüche 1 bis 3, **dadurch gekennzeichnet, dass** diese Metalle in der Probe in Form von Oxiden, Carbonaten, Phosphaten, Sulfiden, Vanadaten, Silikaten und/oder Sulfaten vorliegen.

5. Verfahren nach einem der Ansprüche 1 bis 4, **dadurch gekennzeichnet, dass** eines der Metalle eine seltene Erde oder ein Aktinid und das andere ein Übergangsmetall ist.

6. Verfahren nach einem der Ansprüche 1 bis 4, **dadurch gekennzeichnet, dass** eines der Metalle ein Übergangsmetall, eine seltene Erde oder ein Aktinid, vorzugsweise ein Übergangsmetall, und das andere ein Alkali- oder Erdalkalimetall ist.

7. Verfahren nach einem der Ansprüche 1 bis 6, **dadurch gekennzeichnet, dass** die Mahlvorrichtung ausgewählt ist aus Kugel-, Hammer-, Rotor-, Prall-, Schleifscheiben-, Luftstrahl-, Messer-, Mörser-, Scheiben- oder Stabmühlen, vorzugsweise Kugelmühlen.

8. Verfahren nach einem der Ansprüche 1 bis 7, **dadurch gekennzeichnet, dass** die in Schritt a) und/oder c) verwendeten reaktiven Gase unabhängig voneinander ausgewählt sind aus CO₂, COS, CS₂, H₂S, SO₂, NO₂ und CH₂O, vorzugsweise dass das reaktive Gas CO₂ ist.

9. Verfahren nach einem der Ansprüche 1 bis 8, **dadurch gekennzeichnet, dass** die in Schritt a) und gegebenenfalls c) verwendeten Amine unabhängig voneinander ausgewählt sind aus Ethylendiamin, Diethylentriamin, Triethylentetramin und Tris-(2-aminoethyl)amin, vorzugsweise dass das Amin Diethylentriamin (DETA) ist.

10. Verfahren nach einem der Ansprüche 1 bis 9, **dadurch gekennzeichnet, dass** Schritt a) in Abwesenheit von Lösungsmittel durchgeführt wird.

11. Verfahren nach einem der Ansprüche 1 bis 9, **dadurch gekennzeichnet, dass** Schritt a) in Gegenwart von Wasser durchgeführt wird.

12. Verwendung des Verfahrens nach einem der Ansprüche 1 bis 11 zur Trennung zweier chemischer Elemente, die in einer Probe enthalten sind, die eine Mischung aus Metallsalzen dieser chemischen Elemente enthält.

## Claims

1. A process for extracting at least one metal contained in a sample comprising a mixture of metal salts of at least two different metals, comprising the successive steps consisting in:
a) contacting said sample, in a grinding device, with at least one amine comprising at least one primary or secondary amine function and at least one reactive gas, or with an adduct formed by reacting at least one such amine with a reactive gas,
b) recovering the solid thus formed,
c) subjecting said solid to at least one leaching sequence using a washing solution formed of at least one organic or aqueous solvent optionally containing at least one amine and/or one reactive gas, so as to generate washing waters comprising at least one of the metals contained in the sample and a solid residue enriched in at least one other metal contained in the sample, and
d) recovering the metal contained in said washing waters and/or in said solid residue.

2. The process according to claim 1, **characterized in that** said sample is a solid from technological waste or from natural deposits.

3. The process according to claim 1 or 2, **characterized in that** the sample comprises at least two metals chosen from the group of poor metals, alkali metals, alkaline earth metals, actinides, rare earths and transition metals.

4. The process according to any one of claims 1 to 3, **characterized in that** said metals are in the form of oxide, carbonate, phosphate, sulfide, vanadate, silicate and/or sulfate, in the sample.

5. The process according to any one of claims 1 to 4, **characterized in that** one of the metals is a rare earth or an actinide and the other is a transition metal.

6. The process according to any one of claims 1 to 4, **characterized in that** one of the metals is a transition metal, a rare earth or an actinide, preferably a transition metal, and the other is an alkaline or alkaline earth metal.

7. The process according to any one of claims 1 to 6, **characterized in that** the grinding device is selected from ball, hammer, rotor, impact, grinding wheel, air jet, knife, mortar, disc or bar mills, preferably ball mills.

8. The process according to any one of claims 1 to 7, **characterized in that** the reactive gases used in step a) and/or c) are independently selected from CO₂, COS, CS₂, H₂S, SO₂, NO₂ and CH₂O, preferably the reactive gas is CO₂.

9. The process according to any one of claims 1 to 8, **characterized in that** the amines used in step a) and optionally c) are independently selected from ethylenediamine, diethylenetriamine, triethylenetetramine and tris-(2-aminoethyl)amine, preferably the amine is diethylenetriamine (DETA).

10. The process according to any one of claims 1 to 9, **characterized in that** step a) is carried out in the absence of solvent.

11. The process according to any one of claims 1 to 9, **characterized in that** step a) is carried out in the presence of water.

12. A use of the process according to any one of claims 1 to 11 for separating two chemical elements contained in a sample comprising a mixture of metal salts of these chemical elements.
